# EUROPÄISCHE PATENTSCHRIFT

(11) **EP 1 241 065 B1**
(45) Veröffentlichungstag und Bekanntmachung des Hinweises auf die Patenterteilung: **02.01.2004**
(21) Anmeldenummer: 02001212.6
(22) Anmeldetag: 17.01.2002
(51) Int. Cl.: B60T 8/00

(54) **Zweikreisbremsanlage mit elektronisch lastabhängiger Bremskraftverteilung für mit einer Antiblockierschutzeinrichtung ausgestattete Kraftfahrzeuge mit einer Einrichtung zur Erkennung eines Ausfalles eines Vorderachsbremskreises**
Brake system having two brake circuits, with electronical load dependent braking force distribution, for motor vehicles having an ABS system, comprising a device for failure recognition in a front axle brake circuit
Système de freinage à deux circuits avec répartition de la force de freinage dépendant de la charge, pour véhicules motorisés équipés d'un système de freinage ABS, équipé d'un dispositif de reconnaissance de défauts d'un circuit de freinage d'essieu avant

(30) Priorität: 15.03.2001 DE 10112468; 06.04.2001 DE 10117221
(43) Veröffentlichungstag der Anmeldung: 18.09.2002
(73) Patentinhaber: WABCO GmbH & Co. OHG, 30432 Hannover (DE)
(72) Erfinder: Schmidt, Detlef, 30989 Gehrden (DE); Stanusch, Gerald, 31177 Harsum (DE); Wolff, Hans-Klaus, 31832 Springe (DE)
(74) Vertreter: Schrödter, Manfred

(56) Entgegenhaltungen:
- DE-A- 4 224 971
- DE-A- 19 620 583
- DE-A- 19 705 619

## Beschreibung

Die Erfindung betrifft eine Zweikreisbremsanlage mit elektronisch lastabhängiger Bremskraftverteilung für mit einer Antiblockierschutzeinrichtung ausgestattete Kraftfahrzeuge mit einer Einrichtung zur Erkennung eines Ausfalles eines Vorderachsbremskreises gemäß Oberbegriff des Anspruchs 1.

Bei Zweikreisbremsanlagen mit elektronisch lastabhängiger Bremskraftverteilung für mit einer Antiblockierschutzeinrichtung ausgestattete Kraftfahrzeuge soll eine elektronische Bremskaftbegrenzung durch Ansteuerung der Magnetregelventile der Hinterachse den Schlupf der Hinterachse in einem vorgegebenen Band zu dem der Vorderachse halten. Eingangsgrößen dafür sind die Radgeschwindigkeiten und das Bremslichtschaltersignal. Eine Rechen-/Steuereinheit errechnet sich aus den Radgeschwindigkeiten, die für die Funktion notwendigen Größen wie Fahrzeuggeschwindigkeit und Schlupf der Hinterachs-Räder. Bei anliegendem Bremslichtschaltersignal und Überschreiten eines Schlupfsollwertes und einer Verzögerungsstartschwelle der Hinterachsräder werden die Antiblockierschutz-Magnetregelventile der Hinterachse auf "Druck halten" geschaltet. Wird der Schlupfsollwert während der Regelung unterschritten, wird der Druck erhöht bis der gewünschte Schlupfsollwert wieder erreicht ist. Bei Abfall des Bremslichtschaltersignales oder stehendem Fahrzeug wird die Bremskraftbegrenzungs-Funktion beendet.

Die Bremskraftbegrenzungs-Funktion für die Hinterräder wird gestartet, wobei die Antriebsachsmagnetregelventile auf "Halten" geschaltet werden, wenn
1. der Bremslichtschaltereingang aktiviert wurde,
2. die Fahrzeugbeschleunigung unter einer vorgegebenen Startverzögerung liegt und
3. die Schlupfdifferenz zwischen Hinter- und Vorderachse unter einer vorgegebenen Abweichung vom Schlupfsollwert liegt.

Überschreitet die Schlupfdifferenz den Sollschlupfwert bei gleichzeitig mindestens gleich gebliebener Fahrzeugverzögerung, wird der HA-Druck, solange diese Bedingung erfüllt bleibt, langsam erhöht. Die Druckaufbaugeschwindigkeit an der Hinterachse ist damit proportional der Betätigungsgeschwindigkeit des Bremspedales. Um unnötige Magnetregelventilbetätigungen zu vermeiden, wird eine Folgeeinsteuerung nur zugelassen, wenn die Fahrzeugverzögerung nach der letzten Einsteuerung zugenommen hat. Druckeinsteuerungen bei bereits anliegendem Maximaldruck werden so verhindert.

Die Funktion wird beendet, wenn das Bremslichtschaltersignal abfällt, eine Antiblockierschutz-Regelung gestartet wird oder aufgrund des Schlupf- und Beschleunigungsverhaltens ein Lösen der Bremse vermutet wird. Dies wird angenommen, wenn die Schlupfdifferenz oberhalb des Schlupfsollwertes liegt und die Fahrzeugverzögerung um einen bestimmten Wert (bspw. 0,1 g) über der minimalen während der Bremsung aufgetretenen Fahrzeugverzögerung liegt.

Die PCT/EP97/03403 offenbart eine zweikreisige Bremsanlage mit Vorderachs-Hinterachs-Bremskreisaufteilung, mit einer Einrichtung zur Erkennung eines Ausfalles des Vorderachsbremskreises, mit je einem Radsensor pro Fahrzeugrad und mit einer elektronischen Recheneinheit, welche aus dem Einzelraddrehverhalten der Fahrzeugräder Einzelradgeschwindigkeiten und eine Fahrzeug-Differenzgeschwindigkeit ermittelt, wobei auch Einzelradverzögerungen und eine Fahrzeugverzögerung berechnet werden. Wenn bei Geradeausfahrt während einer Bremsung der Schlupf an den Hinterädern über eine bestimmte Zeit einen bestimmten Wert überschreitet, obwohl die Einzelradverzögerungen der Vorderräder im wesentlichen der Fahrzeuggeschwindigkeit entsprechen, so wird ein Ausfall des Vorderachsbremskreise angenommen. Es wird dann der Hinterachsbremsdruck durch ein schnelles Druckaufbaupulsraster dem ungeregelten Bremsdruck angepaßt. Durch diesen gepulsten Druckaufbau hat ein Antiblockiersystem der Bremsanlage die Möglichkeit, rechtzeitig gegen ein Blockieren der Hinterräder vorzugehen. Wenn bei Kurvenfahrt die Geschwindigkeits-Differenzen zwischen jeweils dem linken und dem rechten Rad einer Achse gebildet und miteinander verglichen werden und die Hinterachsgeschwindigkeitsdifferenz über längere Zeit die Vorderachsgeschwindigkeitsdifferenz um ein bestimmtes Maß überschreitet, wird ein Ausfall des Vorderachsbremskreises angenommen. Es wird dann während einer Regelphase elektronischer Bremskraftverteilung der Bremsdruck an den Hinterachsbremsen sofort erhöht und dem ungerelten Bremsdruck angepaßt. Diese bekannte Einrichtung könnte funktionieren, wenn das Ansprechverhalten der Bremsen der Vorder- und Hinterachse einigermaßen gleich ist und die Begrenzungsfunktion der elektronischen beladungsabhängigen Bremskraftverteilungseinrichtung nicht bereits bei sehr kleiner Verzögerung (< 0,2 g) gestartet werden soll, wie dies bei Anwendung im PKW-Bereich gegeben ist. Bei Nutzfahrzeugen müßte die bekannte Einrichtung bereits bei Verzögerungen < 0,2 g aktiviert werden, so daß ohnehin keine große Differenz zwischen Vorderradverzögerung und berechneter Fahrzeugverzögerung auftreten kann. Zudem kann das Ansprechverhalten der Bremsen an der Vorder- und Hinterachse aufgrund der Kennlinien verschiedener pneumatischer Komponenten stark variieren. Als Folge davon ist gerade im unteren Verzögerungsbereich ein erhöhter Schlupf der Hinterachse ganz normal. Bei Nutzfahrzeugen ist die bekannte Einrichtung daher nicht sinnvoll einsetzbar.

Die Veröffentlichung SAE Technical Paper Nr. 920646 offenbart eine elektronische Bremskraftverteilungssteuerung für Fahrzeuge mit Antiblockierschutzregelung, bei der eine kurzzeitige, geringe Druckabsenkung an den Vorderrädern vorgenommen und die Radreaktion anhand der Radgeschwindigkeit und Radbeschleunigung gemessen wird. Bleibt die Radreaktion aus, wird angenommen, daß der Vorderachsbremskreis ausgefallen ist. Es wird dann die elektronische Bremskraftverteilungsfunktion so modifiziert, daß der Bremsdruck für den Hinterachsbremskreis bis zur Blockierschwelle aufgebaut wird. Nachteilig ist, daß Entlüftung an einem Rad der Lenkachse zu Irritationen des Fahrers führen kann, wenn diese spürbar ist. Zudem ist bei der sehr geringen Startverzögerung der Begrenzungsfunktion der elektronischen beladungsabhängigen Bremskraftverteilungssteuerung im Nutzfahrzeugbereich kaum ein Unterschied im Radverhalten zu erkennen, wenn die Vorderachse bei voll durchgetretenem Bremspedal keine Bremswirkung hat oder gewollt nur eine sehr schwache Teilbremsung gemacht werden soll.

Der Oberbegriff des Anspruchs 1 ist aus dem Dokument DE-A-4224971 bekannt geworden.

Die Aufgabe der vorliegenden Erfindung besteht darin, eine Bremsanlage der eingangs genannten Art so auszubilden, daß der Ausfall des Vorderachsbremskreises sicherer erkennbar ist - auch bei sehr geringen Fahrzeugverzögerungen.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung lehrt, bei bereits laufender Begrenzungsfunktion der elektronisch lastabhängigen Bremskraftverteilungseinrichtung (Hinterachsdruck wird begrenzt, so daß Hinterachs- und Vorderachsschlupf im wesentlichen gleich sind) bei sehr geringer Fahrzeugverzögerung (< 0,2 g) den Bremsdruck an den Hinterrädern nach einer bestimmten Zeit kurzzeitig zu erhöhen und das Radverhalten der betreffenden Räder auszuwerten. Im Normalfall wird sich an der Radgeschwindigkeit kaum eine Änderung feststellen lassen, da der ansteuernde Vordruck bei der geringen, vom Fahrer per Fußbremsventil vorgegebenen Sollverzögerung nur geringfügig über dem durch die Begrenzungsfunktion gehaltenen Druck liegt. Liegt jedoch ein Ausfall der Vorderachsbremswirkung vor, dann wird der Fahrer automatisch den Vordruck erhöhen, um seine gewünschte Verzögerung zu erhalten. Bei der dann sich ergebenden großen Druckdifferenz zwischen gehaltenem Hinterachsbremsdruck und Vordruck bewirkt die kurzzeitige Erhöhung des Druckes eine eindeutige Reaktion der Radgeschwindigkeit, indem der Schlupf der Hinterachsräder innerhalb kurzer Zeit zunimmt. In diesem Falle wird die Bremskraftbegrenzungsfunktion der Bremskraftverteilungseinrichtung für die Hinterräder abgebrochen und der volle Hinterachsbremsdruck durch gepulstes Einsteuern eingestellt.

Die Erfindung ermöglicht die Erkennung des Ausfalls der Bremswirkung der Vorderachse bereits bei sehr geringen Fahrzeugverzögerungen ohne zusätzlichen Schalter. Sie ist daher für die Anwendung im Nutzfahrzeugbereich besonders geeignet.

Die Erfindung soll nachfolgend anhand der beigefügten Zeichnung, in der ein Ausführungsbeispiel dargestellt ist, näher erläutert werden.

Es zeigt
- Fig. 1: beispielhaft ein Blockschaltbild einer erfindungsgemäßen Zweikreisbremsanlage und
- Fig. 2: ein Flußdiagramm des erfindungsgemäßen Verfahrens bei der Zweikreisbremsanlage nach Fig. 1.

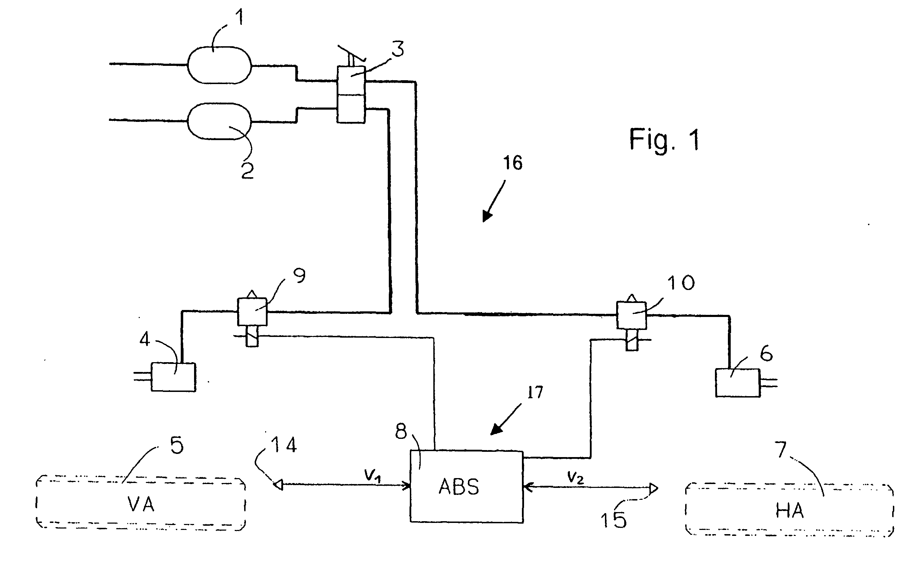

Die Fig. 1 zeigt schematisch eine mit Druckluft betriebene Zweikreisbremsanlage 16, insbesondere für einen Lastkraftwagen, die zusätzlich mit einem Antiblockiersystem (ABS) 17 ausgerüstet ist. Anstelle eines Antiblockiersystems kann auch ein elektrisches Bremssystem (EBS) vorgesehen sein, in welchem üblicherweise ein Antiblockiersystem integriert ist. Anstelle einer pneumatischen Bremsanlage kann auch eine hydraulisch oder elektrisch betätigte Bremsanlage vorgesehen sein. In der Fig. 1 sind für Druckleitungen dickere Linien und für elektrische Leitungen dünnere Linien vorgesehen.

Zur übersichtlicheren Darstellung sind nur die Räder und zugehörigen pneumatischen Bauteile einer Fahrzeugseite dargestellt. Die zur Betätigung der Bremsen benötigte Druckluft wird in Druckluftbehältern 1, 2 bereitgestellt. Über ein Fußbremsventil 3 kann der Fahrer ausgehend von dem Vorratsdruck der Druckluftbehälter einen zur Abbremsung gewünschten Bremsdruck bzw. eine hieraus resultierende Bremskraft vorgeben. Das Fußbremsventil 3 ist zweikreisig ausgebildet und führt zum einen über ein ABS-Regelventil 9 zu einem Bremszylinder 4 für ein Rad 5 der Vorderachse und zum anderen über ein weiteres ABS-Regelventil 10 zu einem Bremszylinder 6 für ein Rad 7 der Hinterachse (HA). Die ABS-Regelventile 9, 10 sind vorzugsweise als elektrisch betätigbare Magnetventile ausgebildet, welche von einem elektronischen Steuergerät 8 des Antiblockiersystemes mit elektrischen Betätigungssignalen beaufschlagbar sind.

Das Steuergerät 8 erhält über Radsensoren 14, 15 Informationen über das Drehverhalten der Räder. Sollten die Räder eine Blockierneigung zeigen, gibt das Steuergerät 8 in bekannter Weise Betätigungssignale an die Regelventile 9, 10 aus, welche den Bremsdruck herabsetzen und somit die Blockierneigung wieder beseitigen können.

Aus den von den Radsensoren 14, 15 abgegebenen Informationen berechnet das Steuergerät 8 die Radrotationsgeschwindigkeit des jeweiligen Rades bzw. über geeignete Umrechnungskonstanten die mittleren Radrotationsgeschwindigkeiten der Räder der Vorderachse und der Hinterachse des Fahrzeuges.

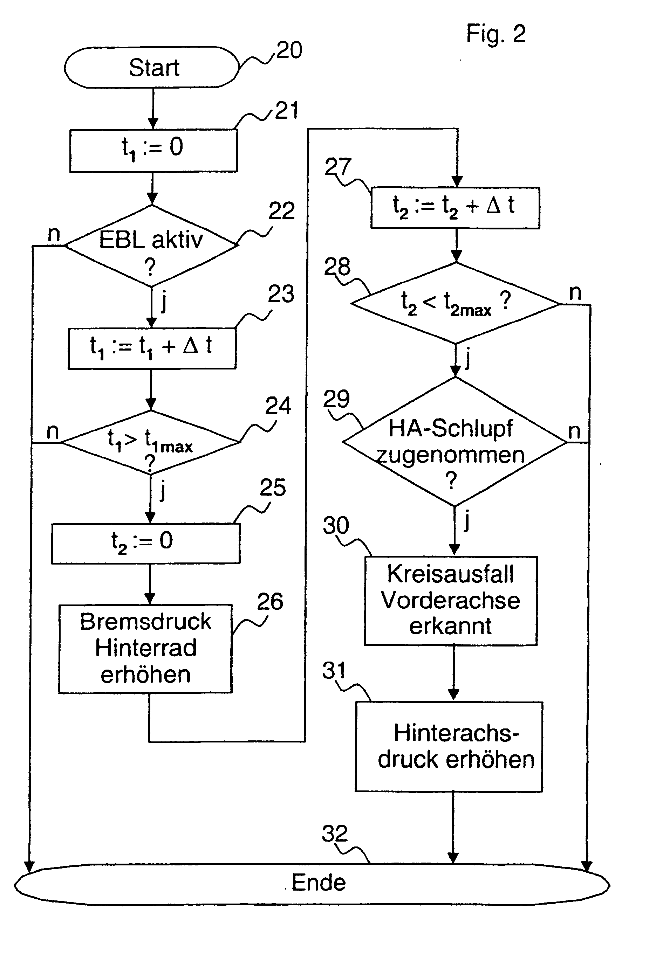

In der Fig. 2 ist eine bevorzugte Ausgestaltung der Erfindung als Flußdiagramm dargestellt. Das mit dem Block 20 beginnende Verfahren wird fortlaufend als Teil eines Steuerprogrammes in dem Steuergerät 8 des Antiblockiersystemes ausgeführt.

In einem Zuweisungsblock 21 wird zunächst ein erster Zähler des ABS-Steuergerätes 8 auf null gesetzt und gestartet. In einem nachfolgenden Verzweigungsblock 22 wird geprüft, ob die EBL (elektronische Bremskraftverteilungseinrichtung) zum Zeitpunkt t₁ = 0 aktiv ist. Wenn dies nicht der Fall ist, wird zum Verfahrensende 32 gesprungen; anderenfalls wird zu einem Zuweisungsblock 23 verzweigt, in dem der erste Zähler mit Δ t (z. B. 5 ms) weitergeschaltet wird. In einem folgenden Verzweigungsblock 24 wird geprüft, ob nach Ablauf einer Wartezeit t_{1 max} (z. B. 1 s) die EBL noch aktiv ist. Wenn dies nicht der Fall ist, wird zum Verfahrensende 32 gesprungen; anderenfalls wird zu einem Zuweisungsblock 25 verzweigt, in dem ein zweiter Zähler des ABS-Steuergerätes 8 auf null gesetzt und gestartet wird. In einem nachfolgenden Block 26 erfolgt dann ein Bremsdruckaufbau an den Hinterrädern über eine vorgegebene Zeit, bspw. 20 ms, wobei sich die Druckerhöhung aus dem über das Fußbremsventil 3 anstehenden Vordruck ergibt. Im nachfolgenden Zuweisungsblock 27 wird der zweite Zähler mit Δ t (bspw. 5 ms) weitergeschaltet. Im folgenden Verzweigungsblock 28 wird geprüft, ob vor Ablauf einer Wartezeit t_{2 max} (bspw. 60 ms) der durch den Druckaufbau bewirkte Schlupf der Hinterräder zugenommen hat. Wenn dies nicht der Fall ist, wird zum Verfahrensende 32 gesprungen; anderenfalls wird zu einem Verzweigungsblock 29 verzweigt, in dem geprüft wird, ob der Schlupf der Hinterräder bezogen auf die Rotationsgeschwindigkeit der Vorderräder um wenigstens einen bestimmten Prozentsatz, bspw. 1 %, zugenommen hat. Wenn dies nicht der Fall ist, wird zum Verfahrensende 32 gesprungen; anderenfalls wird zu einem Block 30 verzweigt, in dem auf Ausfall des Vorderachs-Bremskreises erkannt wird, da die Zunahme des Schlupfes bedeutet, daß der Fahrer sehr stark bremst und damit der an den Regelventilen 10 des Hinterachs-Bremskreises anstehende Vordruck sehr hoch ist. Im nachfolgenden Block 31 wird dann der Bremsdruck über eine vorgegebene Zeit an der Hinterachse erhöht, vorzugsweise gepulst, bspw. in zwanzig Schritten mit jeweils 10 ms Bremsdruck-Aufbauzeiten. Danach wird zum Verfahrensende 32 gesprungen.

## Patentansprüche

1. Zweikreisbremsanlage (16) mit elektronisch lastabhängiger Bremskraftverteilung für mit Antiblockierschutzregeleinrichtung ausgestattete Kraftfahrzeuge, mit einer Einrichtung zur Erkennung eines Ausfalles eines Vorderachsbremskreises, mit wenigstens einem Radsensor (14,15) pro Fahrzeugachse, mit Magnetregelventilen zur Bremsdruckmodulation der Vorder- und Hinterradbremsen und mit einer elektronischen Rechen-/Steuereinheit, welche aus den Radsensorsignalen die Radgeschwindigkeit, die Fahrzeuggeschwindigkeit, die Rad- und Fahrzeugverzögerung sowie den Schlupf der Hinterachsräder ermittelt, **dadurch gekennzeichnet, daß**
die Rechen-/Steuereinheit während einer Regelphase der elektronisch lastabhängigen Bremskraftverteilungseinrichtung bei Fahrzeugverzögerungen unter einem bestimmten Wert den Bremsdruck an wenigstens einem der Hinterräder kurzzeitig erhöht und das Radverhalten anhand der sich ergebenden Radgeschwindigkeit des Rades oder der Räder ermittelt und
bei Zunahme des Schlupfes eines Hinterrades oder der Hinterräder auf einen Ausfall des Vorderachsbremskreises erkennt und die Regelphase der elektronisch lastabhängigen Bremskraftverteilungseinrichtung und damit die Begrenzung des Hinterachsbremsdruckes abbricht und den vollen Hinterachsbremsdruck gepulst in die Hinterradbremsen einsteuert.

2. Bremsanlage nach Anspruch 1, **dadurch gekennzeichnet, daß** bei der kurzzeitigen Erhöhung des Bremsdruckes an nur einem Hinterachsrad die Bremsdruckerhöhung an dem schnelleren Rad der beiden Hinterräder erfolgt.

3. Bremsanlage nach Anspruch 1 oder 2, **dadurch gekennzeichnet, daß** die kurzzeitige Erhöhung des Druckes des Hinterrades oder der Hinterräder nach Ablauf einer bestimmten Wartezeit nach Beginn der Regelphase erfolgt.

4. Bremsanlage nach einem der Ansprüche 1 bis 3, **dadurch gekennzeichnet, daß** die Rechen-/Steuereinheit bei Erkennung des Ausfalles des Vorderachsbremskreises ein Warnsignal abgibt.

5. Bremsanlage nach Anspruch 4, **dadurch gekennzeichnet, daß** die Rechen-/Steuereinheit die Begrenzung des Hinterachsbremsdruckes nach Abgabe des Warnsignales unabhängig von einem erneuten Erkennen des Ausfalles des Vorderachsbremskreises für den Rest der Fahrt verhindert.

6. Bremsanlage nach Anspruch 3, **dadurch gekennzeichnet, daß** die Wartezeit eine Sekunde beträgt.

7. Bremsanlage nach Anspruch 1, **dadurch gekennzeichnet, daß** die kurzzeitige Bremsdruckerhöhung bei Fahrzeugverzögerungen unter 0,2 g erfolgt.

## Claims

1. Dual circuit brake system (16) having electronic load-dependent brake force distribution for motor vehicles equipped with an anti-lock protection control facility, having a device for recognising failure of a front axle brake circuit, having at least one wheel sensor (14, 15) per vehicle axle, having electromagnetic control valves for brake pressure modulation of the front and rear wheel brakes and having an electronic processor/control unit, which determines the wheel speed, the vehicle speed, the wheel and vehicle deceleration and the slip of the rear axle wheels from the wheel sensor signals, **characterised in that**
during a control phase of the electronic load-dependent brake force distribution device, at vehicle decelerations below a specific value, the processor/control unit briefly increases the brake pressure at at least one of the rear wheels and determines the wheel behaviour on the basis of the resulting wheel speed of the wheel or wheels and
upon increase in the slip of a rear wheel or the rear wheels recognises a failure of the front axle brake circuit and stops the control phase of the electronic load-dependent brake force distribution device and hence the limitation of the rear axle brake pressure and introduces the full rear axle brake pressure in pulses into the rear wheel brakes.

2. Brake system according to claim 1, **characterised in that** on brief increase in the brake pressure at just one rear axle wheel, brake pressure increase is effected at the faster wheel of the two rear wheels.

3. Brake system according to claim 1 or 2, **characterised in that** the brief increase in the pressure of the rear wheel or the rear wheels is effected after expiry of a specific waiting period after the start of the control phase.

4. Brake system according to any one of claims 1 to 3, **characterised in that** the processor/control unit emits a warning signal when failure of the front axle brake circuit is recognised.

5. Brake system according to claim 4, **characterised in that** after emission of the warning signal the processor/control unit prevents limitation of the rear axle brake pressure for the remainder of the journey regardless of a new recognition of failure of the front axle brake circuit.

6. Brake system according to claim 3, **characterised in that** the waiting period amounts to one second.

7. Brake system according to claim 1, **characterised in that** the brief brake pressure increase is effected at vehicle decelerations of less than 0.2 g.

## Revendications

1. Installation de freinage à deux circuits (16) avec répartition électronique de la force de freinage en fonction de la charge, pour des véhicules automobiles équipés d'un système de régulation de protection anti-blocage, comportant un dispositif de reconnaissance de la défaillance d'un circuit de freinage de l'essieu avant, comportant au moins un détecteur de roue (14, 15) par essieu de véhicule, des valves de régulation magnétiques pour la modulation de la pression de freinage des freins de roue avant et des freins de roue arrière et comportant une unité de calcul/commande électronique qui détermine à partir des signaux de détecteurs de roue la vitesse des roues, la vitesse du véhicule, la décélération des roues et la décélération du véhicule ainsi que le glissement des roues de l'essieu arrière,
**caractérisée en ce que**
pendant une phase de régulation du dispositif de répartition électronique de la force de freinage en fonction de la charge, en cas de décélérations du véhicule au-dessous d'une valeur déterminée, l'unité de calcul/commande augmente brièvement la pression de freinage au niveau de l'une au moins des roues arrière et détermine le comportement de la roue en se basant sur la vitesse résultante de la roue ou des roues, et
- lors d'une augmentation du glissement d'une roue arrière ou des roues arrière, elle conclut à une défaillance du circuit de frein de l'essieu avant et elle interrompt la phase de régulation du dispositif de répartition électronique de la force de freinage en fonction de la charge et ainsi la limitation de la pression de freinage de l'essieu arrière, et elle applique la totalité de la pression de freinage de l'essieu arrière de façon pulsée dans les freins des roues arrière.

2. Installation de freinage selon la revendication 1, **caractérisée en ce que** lors de la brève augmentation de la pression de freinage au niveau d'une seule roue de l'essieu arrière, l'augmentation de la pression de freinage s'effectue au niveau de la roue plus rapide des deux roues arrière.

3. Installation de freinage selon l'une ou l'autre des revendications 1 et 2, **caractérisée en ce que** la brève augmentation de la pression de la roue arrière ou des roues arrière s'effectue après écoulement d'une certaine période d'attente après le début de la phase de régulation.

4. Installation de freinage selon l'une des revendications 1 à 3, **caractérisée en ce que** l'unité de calcul/commande émet un signal avertisseur lors de la reconnaissance de la défaillance du circuit de frein de l'essieu avant.

5. Installation de freinage selon la revendication 4, **caractérisée en ce que** l'unité de calcul/commande empêche la limitation de la pression de freinage de l'essieu arrière après émission du signal avertisseur indépendamment d'une nouvelle reconnaissance de la défaillance du circuit de frein de l'essieu avant pour le reste du déplacement.

6. Installation de freinage selon la revendication 3, **caractérisée en ce que** la période d'attente s'élève à une seconde.

7. Installation de freinage selon la revendication 1, **caractérisée en ce que** la brève augmentation de la pression de freinage s'effectue à des décélérations de véhicule inférieures à 0,2 g.
